# EUROPÄISCHE PATENTANMELDUNG

(11) **EP 4 269 985 A1**
(43) Veröffentlichungstag der Anmeldung: **01.11.2023**
(21) Anmeldenummer: 23166961.5
(22) Anmeldetag: 06.04.2023
(51) Int. Cl.: G01N 17/00, F24F 11/36, G01M 3/16

(54) **GASSENSOR UND VERFAHREN ZUR DETEKTION VON GAS**

(30) Priorität: 28.04.2022 DE 102022110340
(71) Anmelder: Weiss Technik GmbH, 35447 Reiskirchen (DE)
(72) Erfinder: Zahrt, Yannik, 35466 Rabenau (DE); Diehl, Felix, 35321 Laubach (DE)
(74) Vertreter: advotec.

(57) **Zusammenfassung**

Die Erfindung betrifft einen Gassensor (34) und ein Verfahren zur Detektion von Gas in einem Prüfraum (37) einer Prüfkammer zur Konditionierung von Luft, insbesondere Temperierkammer, Klimakammer oder dergleichen, sowie eine Prüfkammer, wobei der Gassensor einen Sensorkopf (35) aufweist, der mit einer Atmosphäre des Prüfraums in Kontakt bringbar ist, wobei mittels des Gassensors ein Gas, insbesondere ein Kältemittel und/oder ein Kohlenwasserstoff, in dem Prüfraum detektierbar ist, wobei der Gassensor ein Transportrohr (36) aufweist, über das ein Messgas aus dem Prüfraum zu dem Sensorkopf förderbar ist.

## Beschreibung

Die Erfindung betrifft einen Gassensor und ein Verfahren zur Detektion von Gas in einem Prüfraum einer Prüfkammer zur Konditionierung von Luft, insbesondere Temperierkammer, Klimakammer oder dergleichen, sowie eine Prüfkammer mit einem Gassensor, wobei der Gassensor einen Sensorkopf aufweist, der mit einer Atmosphäre des Prüfraums in Kontakt bringbar ist.

Gassensoren sind hinreichend bekannt und dienen regelmäßig zur Detektion von Gasen in einer Atmosphäre bzw. Luftatmosphäre. Ein Gassensor weist dabei einen sogenannten Sensorkopf auf, der mit der betreffenden Atmosphäre in Kontakt bringbar ist. Der Gassensor kann beispielsweise ein Sensorgehäuse umfassen, innerhalb dem der Sensorkopf angeordnet ist. So kann der Sensorkopf gegen beispielsweise mechanische Beschädigungen geschützt werden. Weiter ist auch bekannt derartige Gassensoren in einem Prüfraum einer Prüfkammer zu platzieren, um dort eventuell durch ein zu prüfenden Gegenstand erzeugte Gase innerhalb des Prüfraums detektieren zu können. Derartige Gassensoren sind jedoch nur innerhalb eines vergleichsweise engen Temperaturbereichs und bei moderaten Klimabedingungen nutzbar. Eine sehr hohe relative Luftfeuchte oder sehr niedrige bzw. hohe Lufttemperaturen führen leicht zum Ausfall und gegebenenfalls zur Zerstörung des Gassensors.

Prüfkammern werden regelmäßig zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -50 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln. Eine derartige Prüfkammer ist aus der EP 0 344 397 A2 bekannt.

Das in einem Kühlkreislauf der Prüfkammer eingesetzte Kältemittel sollte ein relatives geringes CO2-Äquivalent aufweisen, d.h. ein relatives Treibhauspotenzial oder auch Global Warming Potential (GWP) sollte möglichst gering sein, um eine indirekte Schädigung der Umwelt durch das Kältemittel bei Freisetzung zu vermeiden. Infolge gesetzlicher Bestimmungen darf ein Kältemittel nicht wesentlich zum Ozonabbau in der Atmosphäre oder der globalen Erwärmung beitragen. So sollen im Wesentlichen keine fluorierten Gase oder fluorierten Stoffe als Kältemittel eingesetzt werden, weshalb natürliche Kältemittel, beispielsweise Kohlenstoffdioxid (CO2) in Frage kommen. Nachteilig bei derartigen Kältemitteln mit geringen GWP ist, dass diese Kältemittel in den für einen Kühlkreislauf relevanten Temperaturbereichen eine teilweise deutlich verringerte Kälteleistung im Vergleich zu Kältemitteln mit vergleichsweise größeren GWP aufweisen. Es ist zwar auch bekannt, Kohlenwasserstoffe als Kältemittel zu verwenden, hier ist jedoch nachteilig, dass Kohlenwasserstoffe leicht brennbar sind. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm DN 2 bzw. der DIN 378 Klassen A2, A2L und A3 in der zuletzt am Prioritätstag gültigen Fassung fällt. Wird ein brennbares Kältemittel verwendet, ist unter anderem eine Befüllung, ein Versand und ein Betrieb eines Kühlkreislaufs bzw. einer Prüfkammer aufgrund der einzuhaltenden Sicherheitsvorschriften erschwert. Ein wesentliches Problem ist eine mögliche Leckage des Kühlkreislaufs innerhalb des Prüfraums, in dem sich elektrische Widerstandsheizungen und auch elektrisch betriebene Geräte, als Prüfgut, befinden können. Im Falle einer Leckage kann es daher zu einer Explosion kommen.

Der vorliegenden Erfindung liegt daher die Aufgabe zugrunde, einen Gassensor und ein Verfahren zur Detektion von Gas sowie eine Prüfkammer mit einem Gassensor vorzuschlagen mit dem bzw. der ein sicherer Betrieb möglich ist.

Diese Aufgabe wird durch einen Gassensor mit den Merkmalen des Anspruchs 1, eine Prüfkammer mit den Merkmalen des Anspruchs 16 und ein Verfahren mit den Merkmalen des Anspruchs 19 gelöst.

Der erfindungsgemäße Gassensor zur Detektion von Gas in einem Prüfraum einer Prüfkammer zur Konditionierung von Luft, insbesondere Temperierkammer, Klimakammer oder dergleichen, weist einen Sensorkopf auf, der mit einer Atmosphäre des Prüfraums in Kontakt bringbar ist, wobei mittels des Gassensors ein Gas, insbesondere ein Kältemittel und/oder ein Kohlenwasserstoff, in den Prüfraum detektierbar ist, wobei der Gassensor ein Transportrohr aufweist, über das ein Messgas aus dem Prüfraum zu dem Sensorkopf förderbar ist.

Der erfindungsgemäße Gassensor dient zur Detektion von Gas, das heißt von einem in der Luft befindlichen gasförmigen Stoff oder Stoffgemisch, welches eine Explosionsatmosphäre zusammen mit der Luft in dem Prüfraum ausbilden kann. Unter Gas wird hier eine definierte Art eines Gases, welches nicht regelmäßig in der Luft der Atmosphäre der Erde enthalten ist, verstanden. Mit dem Gassensor ist es nun möglich eine definierte Art eines Gases in der Atmosphäre des Prüfraums zu detektieren. Unter der Atmosphäre des Prüfraums wird eine Gasatmosphäre bzw. ein Volumen innerhalb des Prüfraums verstanden, wobei der Prüfraum gegenüber einer Umgebung dicht abgeschlossen ist. Das von dem Gassensor detektierbare Gas kann beispielsweise ein Kältemittel und/oder ein Kohlenwasserstoff sein. Damit ist es nun möglich, beispielsweise im Falle einer Leckage der Prüfkammer, in den Prüfraum befindliches Kältemittel mittels des Gassensors zu detektieren und so die Ausbildung einer Explosionsatmosphäre rechtzeitig zu erkennen. Damit der Gassensor auch für die in dem Prüfraum regelmäßig ausgebildeten, sehr hohen und sehr niedrigen Temperaturen sowie die unterschiedlichsten Klimabedingungen nutzbar ist, weist der Gassensor das Transportrohr auf mit dem das aus dem Prüfraum stammende Messgas bzw. im Prüfraum befindliche Luft aus dem Prüfraum zu dem Sensorkopf gefördert werden kann. Hierdurch wird es möglich den Sensorkopf so anzuordnen, dass er einerseits vor mechanischen Beschädigungen geschützt, und andererseits nicht zwangsläufig den im Prüfraum vorherrschenden Temperaturen und Klimabedingungen direkt ausgesetzt ist. Durch die Förderung des Messgases durch das Transportrohr kann das Messgas auch auf seinem Weg in dem Transportrohr zu dem Sensorkopf temperiert werden. Beispielsweise kann dann eine vergleichsweise hohe oder niedrige Temperatur des Messgases an eine zulässige Betriebstemperatur des Sensorkopfes angepasst werden. Unter dem Messkopf wird hier der eigentliche Sensor, das heißt ein diskretes Bauteil verstanden, welches zur unmittelbaren Detektion des Gases dient. Da mit dem Gassensor nun eventuell in der Atmosphäre des Prüfraums befindlichen Gase auch bei für den Sensorkopf sonst nicht zuträglichen Temperaturen und Klimabedingungen detektiert werden können, kann mit dem Gassensor ein sicherer Betrieb einer Prüfkammer wesentlich verbessert werden.

Der Gassensor kann zur Detektion von Gas in dem Prüfraum bei einer Temperatur in einem Temperaturbereich von -50 °C bis +180 °C innerhalb des Prüfraums ausgebildet sein. Auch kann der Gassensor geeignet sein bei einer Temperatur in einem Temperaturbereich von -70 °C bis +180 °C, bevorzugt von -85 °C bis +200 °C Gas innerhalb des Prüfraums zu detektieren.

Der Gassensor kann zur Detektion einer Änderung einer Zusammensetzung der Atmosphäre des Prüfraums ausgebildet sein. Vorteilhaft kann der Gassensor dann jede erdenkliche Änderung der Atmosphäre des Prüfraums bzw. der Zusammensetzung der in dem Prüfraum befindlichen Luft detektieren. Neben einer Leckage der Prüfkammer wird es so auch möglich mittels des Gassensors eventuell an einem zu prüfenden Gegenstand austretende Gase oder sich im Rahmen eines Prüfablaufs entwickelnde Gase zu detektieren. Damit wird es möglich den Gassensor auch zur unmittelbaren Prüfung eines Gegenstands bzw. Produkts zu verwenden.

Der Gassensor kann zur Detektion eines Kältemittels, bevorzugt eines Kältemittels mit der niedrigsten untersten Explosionsgrenze, kalibriert sein. Somit kann sichergestellt werden, dass bei einem Austritt von Kältemittel der Prüfkammer in den Prüfraum dieses sicher detektiert wird. Der Gassensor kann dann so kalibriert sein, dass Kältemittel, die geeignet sind eine Explosionsatmosphäre zusammen mit der Luft in dem Prüfraum auszubilden, detektiert werden. Um dies sicherzustellen, kann auch das Kältemittel mit der niedrigsten untersten Explosionsgrenze detektiert werden. Unter Kältemittel werden hier Fluide gemäß DIN EN 378-1 in der zum Prioritätstag gültigen Fassung verstanden.

Der Sensorkopf kann ein Reaktionswärmesensor bzw. Wärmetönungssensor oder ein Infrarotsensor sein. Ein Reaktionswärmesensor kann mittels katalytischer Wärmetönung eventuell vorhandenes brennbares Gas katalytisch verbrennen und aus der daraus resultierenden Temperaturerhöhung dessen Existenz detektieren. Ein Reaktionswärmesensor ist besonders kostengünstig erhältlich, jedoch nur innerhalb eines bestimmten Temperaturbereiches einsetzbar.

Der Gassensor kann eine Pumpe zur Förderung des Messgases aus dem Prüfraum durch das Transportrohr zu dem Sensorkopf aufweisen. Die Pumpe kann eine Rotationspumpe, Kolbenpumpe oder dergleichen sein. Mittels der Pumpe kann nun das Messgas aus dem Prüfraum abgesaugt und durch das Transportrohr zu dem Sensorkopf gefördert werden. Dadurch wird es möglich das Transportrohr in einer prinzipiell beliebigen Länge auszubilden und so den Sensorkopf auch in einem vergleichsweise großen Abstand zu dem Prüfraum anzuordnen. Prinzipiell ist es jedoch auch möglich, den Sensorkopf innerhalb des Prüfraums zusammen mit dem Gassensor anzuordnen, wenn der Sensorkopf gegenüber den im Prüfraum vorherrschenden Temperaturen isoliert ist. Mittels der Pumpe kann auch eine kontinuierliche Förderung von Messgas, und damit eine kontinuierliche Messung, sichergestellt werden. Weiter wäre es auch möglich, den Gassensor ohne eine Pumpe auszubilden. In diesem Fall wäre es erforderlich, dass ein Durchfluss von Messgas durch das Transportrohr auf andere Art und Weise ermöglicht wird.

Die Pumpe und/oder das Transortrohr kann mit einem Ablauf für Kondensat ausgebildet sein. Wenn Messgas mit hoher Luftfeuchtigkeit, beispielsweise Messgas mit einer Temperatur höher als eine Temperatur des Sensorkopfes durch das Transportrohr zu dem Sensorkopf gefördert wird, kann im Messgas enthaltenes Wasser oder andere Stoffe kondensieren. Dabei ist es von Bedeutung, dass das Kondensat nicht an dem Sensorkopf anfällt, da sonst dessen Funktion beeinträchtigt wäre. Wenn das Kondensat jedoch in dem Transportrohr anfällt, kann an dem Transportrohr und/oder der Pumpe vorteilhaft der Ablauf für das Kondensat ausgebildet sein. Der Ablauf kann auch ein Sammelbehälter oder dergleichen für Kondensat sein.

Die Pumpe kann in einer Strömungsrichtung des Messgases in dem Transportrohr vor dem Sensorkopf angeordnet sein. So ist es dann auch möglich, eventuell in dem Transportrohr anfallendes Kondensat noch vor dem Sensorkopf aus dem Messgas abzuscheiden. Das Kondensat kann dann nicht von der Pumpe weiter zu dem Sensorkopf gefördert werden. Weiter ist es auch möglich die Pumpe in einer Strömungsrichtung des Messgases nach dem Sensorkopf anzuordnen. In diesem Fall kann eine Einrichtung zum Abscheiden von Kondensat vor dem Sensorkopf vorgesehen sein.

Der Gassensor kann einen Lüfter zur Temperierung des Transportrohrs mit dem Messgas mittels erzwungener Konvektion aufweisen. Mit dem Lüfter kann beispielsweise Luft einer Umgebung an dem Transportrohr vorbeigeführt werden, wobei sich das innerhalb des Transportrohrs befindliche Messgas, welches wärmer oder kälter als die Umgebungsluft sein kann, der Temperatur der Umgebungsluft annähern bzw. anpassen kann. Mittels des Lüfters kann mit einfachen Mitteln das Messgas temperiert werden, sodass der Sensorkopf nicht beschädigt wird, der dann das eventuell in dem Messgas befindliche Gas sicher detektieren kann.

Der Gassensor kann mit einem Strömungskanal ausgebildet sein, an dessen Ende der Lüfter angeordnet sein kann, wobei das Transportrohr zumindest abschnittsweise in dem Strömungskanal angeordnet sein kann, wobei mittels des Lüfters eine Luftströmung in dem Strömungskanal ausgebildet werden kann. Der Strömungskanal kann beispielsweise durch einen länglichen Hohlkörper, beispielsweise ein Rohrprofil bzw. ein Rohr mit jeweils offenen Enden ausgebildet sein. Der Lüfter kann an einem beliebigen Ende des Strömungskanals angeordnet sein, derart, dass mit dem Lüfter Luft einer Umgebung durch den Strömungskanal hindurchgefördert werden kann. Diese Luft bzw. Luftströmung kann dann gezielt auf das Transportrohr geleitet werden, wenn dieses abschnittsweise, bevorzugt zu einem überwiegenden Teil seiner gesamten Länge, in dem Strömungskanal angeordnet ist.

Der Lüfter kann ein Axialventilator sein. Axialventilatoren sind besonders kostengünstig erhältlich und können beispielsweise in einfacher Weise an einem Ende eines Strömungskanals montiert werden.

Das Transportrohr kann zumindest abschnittsweise wendelförmig, spiralförmig oder schlangenförmig ausgebildet sein. Durch diese Ausbildung des Transportrohrs kann eine Länge des Transportrohrs wesentlich vergrößert werden. Dadurch wird es dann auch möglich, dass durch das Transportrohr geförderte Messgas in einer Wendel, Spirale oder Schlange des Transportrohrs in der gewünschten Weise zu temperieren. Diese Temperierung kann durch ein weiteres Medium, beispielsweise Luft oder Wasser erfolgen. Der betreffende Abschnitt des Transportrohrs bildet dann einen Wärmeübertrager für das Messgas aus.

Das Transportrohr kann zumindest abschnittsweise durch ein Metallrohr, bevorzugt ein Kupferrohr oder Aluminiumrohr, ausgebildet sein. Die abschnittsweise Ausbildung des Transportrohrs als Metallrohr kann dann vorteilhaft in dem Bereich vorgesehen sein, in dem eine Temperierung des Messgases in dem Transportrohr erfolgt. Durch das Metallrohr kann ein besonders guter Wärmeübergang zwischen dem Messgas und dem Metallrohr sowie einer das Metallrohr umgebenden Umgebung sichergestellt werden. Die Materialien Kupfer und Aluminium weisen einen vorteilhaften Wärmeübergangskoeffizienten auf. Weiter ist es möglich, dass das Transportrohr vollständig durch ein Metallrohr ausgebildet ist.

Das Transportrohr kann zumindest an einer Entnahmestelle für Messgas an dem Prüfraum aus einem Kunststoffrohr ausgebildet sein. Die Entnahmestelle kann beispielsweise in einer Wand des Prüfraums durch eine Öffnung ausgebildet sein. An der Öffnung kann ein Flansch zum Anschluss des Transportrohrs an den Prüfraum vorgesehen sein. Das Kunststoffrohr kann ein Kunststoffschlauch sein. Durch das Kunststoffrohr kann eine thermische Isolierung des Transportrohrs gegenüber dem Prüfraum ausgebildet werden. Wenn eine Wand des Prüfraums aus Metall, beispielsweise Edelstahl, ausgebildet ist, wird diese Wand ebenfalls entsprechend einer Temperatur in dem Prüfraum temperiert. Gleichfalls könnte nun das Transportrohr, wenn es aus Metall besteht, leicht über den Prüfraum erwärmt oder gekühlt werden. Dies kann dadurch verhindert werden, dass zumindest abschnittsweise das Transportrohr an der Entnahmestelle aus einem Kunststoffrohr gebildet ist. Wenn das Transportrohr ebenfalls abschnittsweise durch ein Metallrohr ausgebildet ist, ist es vorteilhaft, wenn das Kunststoffrohr von der Entnahmestelle bis zu dem Metallrohr bzw. zu einem Abschnitt des Transportrohrs führt, der zur Temperierung des Messgases dient.

Auch kann das Transportrohr zumindest an einer Rückführstelle an dem Prüfraum aus einem Kunststoffrohr ausgebildet sein. Wie zuvor beschrieben, kann dadurch eine vorteilhafte Entkopplung des Transportrohrs von einer Temperatur einer Wand des Prüfraums geschaffen werden. Auch hier kann das Kunststoffrohr durch einen Kunststoffschlauch ausgebildet sein. Prinzipiell wäre es auch möglich das Messgas nachfolgend dem Sensorkopf in eine Umgebung zu leiten. Dies hätte jedoch zur Folge, dass der Prüfraum dann nicht mehr vollständig dicht gegenüber einer Umgebung abgeschlossen wäre. Um dies zu verhindern, kann mittels des Transportrohrs das Messgas wieder der Atmosphäre des Prüfraums zugeführt werden. Die Atmosphäre des Prüfraums wird dann auch durch den Gassensor nicht verändert.

Die erfindungsgemäße Prüfkammer zur Konditionierung von Luft, insbesondere Temperierkammer, Klimakammer oder dergleichen, umfasst einen gegenüber einer Umgebung verschließbaren und temperaturisolierten Prüfraum zur Aufnahme von Prüfgut, und eine Temperiervorrichtung zur Temperierung des Prüfraums, mittels der eine Temperatur in einem Temperaturbereich von -50 °C bis +180 °C innerhalb des Prüfraums ausbildbar ist, wobei die Temperiervorrichtung eine Heizeinrichtung und eine Kühleinrichtung mit einem Kühlkreislauf mit einem Kältemittel, einem Wärmeübertrager in dem Prüfraum, einem Verdichter, einem Kondensator und einem Expansionsorgan aufweist, wobei die Prüfkammer zumindest einen erfindungsgemäßen Gassensor zur Detektion von Kältemittel in dem Prüfraum umfasst. Zu den Vorteilen der erfindungsgemäßen Prüfkammer wird auf die Vorteilsbeschreibung des erfindungsgemäßen Gassensors verwiesen. Mit der erfindungsgemäßen Prüfkammer ist es nun möglich in den Prüfraum austretende Gase bzw. Kältemittel im gesamten Temperaturbereich, der innerhalb des Prüfraums ausbildbar ist, rechtzeitig und sicher zu detektieren. So kann mittels des Gassensors eine mögliche Explosion in dem Prüfraum im Falle einer Leckage der Kühleinrichtung bzw. des Kühlkreislaufs verhindert werden. Weiter kann die Prüfkammer dann auch den ATEX-Richtlinien der Europäischen Union, insbesondere der ATEX-Produktrichtlinie 2014/34/EU und/oder der ATEX-Betriebsrichtlinie 1999/92/EG in der am Prioritätstag gültigen Fassung entsprechen.

So kann das Kältemittel brennbar und/oder einen Kohlenwasserstoff oder ein Kältemittelgemisch aus Kohlenwasserstoffen sein. Folglich kann das Kältemittel frei von fluorierten Kohlenwasserstoffen sein. Das Kältemittel kann auch aus einem einzigen Stoff bestehen. Beispielsweise kann das Kältemittel Propan, Ethan, Ethylen, Propen, Isobutan, Butan oder dergleichen sein. Das Kältemittel kann auch ein Kältemittelgemisch aus Kohlenwasserstoffen bzw. den vorgenannten Komponenten oder ein Kältemittelgemisch mit überwiegend Kohlenwasserstoffen sein. Dadurch wird es möglich, zukünftige regulative Anforderungen an Kältemittel zu erfüllen und die Nachteile von fluorierten Kohlenwasserstoffen zu vermeiden. Auch kann das Kältemittel geeignet sein, eine Temperatur in einem Temperaturbereich von -40 °C bis +180 °C, bevorzugt -70 °C bis +180 °C, besonders bevorzugt bis -85 °C bis +200 °C, innerhalb des Prüfraums auszubilden. Folglich wird es dann möglich sich die Vorteile brennbarer Kältemittel gegenüber nicht brennbarer Kältemittel nutzbar zu machen.

Die Prüfkammer kann eine Lüftungsanlage mit einer Detektoreinrichtung mit zumindest dem Gassensor zur Detektion von Kältemittel in dem Prüfraum umfassen, wobei die Detektoreinrichtung zumindest einen weiteren Gassensor in einem gegenüber einem dem Prüfraum Luft dicht getrennten Maschinenraum der Prüfkammer umfassen kann. Da sich in dem Prüfraum regelmäßig Luft befindet, kann sich leicht eine Explosionsatmosphäre ausbilden, die z.B. in Verbindung mit einem möglicherweise in Betrieb stehenden elektrischen Widerstandsheizelement der Heizeinrichtung zu einer Explosion führen kann. Um dies zu verhindern kann eine Lüftungsanlage der Prüfkammer vorgesehen sein, die Luft aus dem Prüfraum absaugen kann. Die Lüftungsanlage umfasst dann die Detektoreinrichtung mit dem Gassensor zur Detektion von Kältemittel und/oder von in dem Kühlkreislauf verwendeten Kältemittel. Der Gassensor kann unmittelbar in dem Prüfraum bzw. an dem Prüfraum angeordnet, an den Prüfraum angeschlossen oder mit dem Prüfraum verbunden sein, derart dass bei einem Austritt von Kältemittel in dem Prüfraum dieses schnell detektiert werden kann. Weiter kann ein Abluftkanal an den Prüfraum angeschlossen sein, so dass mittels des Lüfters die Luft aus dem Prüfraum in den Abluftkanal, und damit aus dem Prüfraum hinaus, gefördert werden kann. Dabei kann über eine eigens dafür vorgesehene Öffnung in dem Prüfraum, beispielsweise eine Druckausgleichsvorrichtung oder einen Zuluftkanal, Luft aus einer Umgebung in den Prüfraum nachströmen. Der Lüfter selbst kann aus einem Lüftermotor und einem Lüfterrad gebildet sein, wobei vorgesehen sein kann, dass der Lüftermotor in einer luftdichten Einhausung angeordnet ist. Dadurch wird es möglich auch Lüftermotoren zu verwenden die nicht ATEXkonform ausgebildet sind. Insgesamt kann so die Lüftungsanlage mit einfachen Mitteln für einen Einsatz unter Explosionsschutzbedingungen nutzbar gemacht werden. Weiter kann die Detektoreinrichtung zumindest einen weiteren Gassensor in bzw. an dem gegenüber dem Prüfraum luftdicht getrennten Maschinenraum umfassen. Mittels des weiteren Gassensors kann im Falle einer Leckage des Kühlkreislaufes auch innerhalb des Maschinenraums ein Austreten von Kältemittel in dem Maschinenraum detektiert werden. Auch hier kann dann mittels der Lüftungsanlage Luft aus alleine dem Maschinenraum oder alternativ aus dem Prüfraum und dem Maschinenraum gleichzeitig abgesaugt werden. In dem Maschinenraum kann ein Ventilkasten angeordnet sein, in dem Ventile der Kühleinrichtung bzw. des Kühlkreislaufs verbaut sind. Dabei kann vorgesehen sein, dass der Ventilkasten zum Maschinenraum hin offen ausgebildet ist, um einen Austritt von Kältemittel aus dem Ventilkasten sicherzustellen, sofern an dieser Stelle eine Leckage vorliegen sollte. Diese Leckage kann dann auch mittels des weiteren Gassensors detektiert werden. Der weitere Gassensor in dem Maschinenraum kann vorzugsweise an einem Boden des Maschinenraums angeordnet sein. So kann dann austretendes Kältemittel, bzw. Kohlenwasserstoff, welcher schwerer als Luft ist, auf den Boden herabsinken und dort sicher detektiert werden. Eventuelle Lüftungsöffnungen in dem Maschinenraum bzw. einem Gehäuse der Prüfkammer, können dann oberhalb des Bodens, beispielsweise 10 cm oberhalb des Bodens des Maschinenraums angeordnet sein, so dass das austretende Kältemittel nicht unbemerkt aus dem Maschinenraum herausgelangen kann.

Weitere vorteilhafte Ausführungsformen der Prüfkammer ergeben sich aus den Merkmalsbeschreibungen der auf den Anspruch 1 zurückbezogenen Unteransprüche.

Bei dem erfindungsgemäßen Verfahren zur Detektion von Gas in einem Prüfraum einer Prüfkammer zur Konditionierung von Luft, insbesondere Temperierkammer, Klimakammer oder dergleichen, wird ein Sensorkopf eines Gassensors mit einer Atmosphäre des Prüfraums in Kontakt gebracht, wobei mittels des Gassensors ein Gas, insbesondere ein Kältemittel und/oder ein Kohlenwasserstoff, in dem Prüfraum detektiert wird, wobei über ein Transportrohr des Gassensors ein Messgas aus dem Prüfraum zu dem Sensorkopf gefördert wird. Zu den vorteilhaften Wirkungen des erfindungsgemäßen Verfahrens wird auf die Vorteilsbeschreibung des erfindungsgemäßen Gassensors verwiesen. Weitere vorteilhafte Ausführungsformen des Verfahrens ergeben sich aus der Merkmalsbeschreibung der auf den Vorrichtungsanspruch 1 zurückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: Eine schematische Darstellung einer Prüfkammer in einer Schnittansicht;
- **Fig. 2**: eine schematische Darstellung der Prüfkammer in einer perspektivischen Teilansicht;
- **Fig. 3**: eine schematische Prinzipdarstellung eines Gassensors.

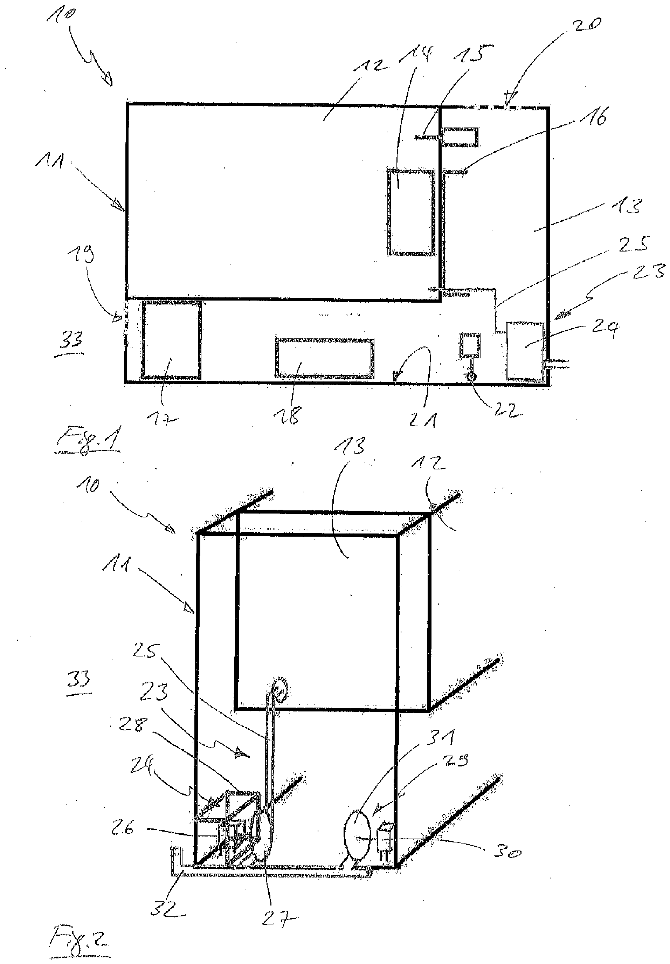

Die **Fig. 1** und **2** zeigen schematische Darstellungen einer Prüfkammer 10 mit einem Gehäuse 11, innerhalb dem ein Prüfraum 12 und ein Maschinenraum 13 gebildet ist. In dem Prüfraum 12 ist ein Wärmeübertrager 14 eines hier nicht näher dargestellten Kühlkreislaufes einer Temperiervorrichtung der Prüfkammer 10 angeordnet. Mittels eines Prüfraumlüfters 15 kann Luft innerhalb des Prüfraums 12 an dem Wärmeübertrager 14 vorbei zirkuliert werden. In dem Maschinenraum 13 ist ein Ventilkasten 16 angeordnet, in dem hier nicht dargestellte Ventile des Kühlkreislaufs verbaut sind. Der Ventilkasten 16 ist offen gegenüber dem Maschinenraum 13 ausgebildet. In dem Maschinenraum 13 sind weiter ein Kondensator 17 und ein Verdichter 18 des Kühlkreislaufs angeordnet. In dem Maschinenraum 13 sind Öffnungen 19 und 20 zur Durchlüftung des Maschinenraums 13 ausgebildet. An einem Boden 21 des Maschinenraums 13 ist ein weiterer Gassensor 22 einer hier nicht weiter dargestellten Detektoreinrichtung angeordnet. Darüber hinaus ist in dem Maschinenraum 13 eine Lüftungsanlage 23 vorgesehen. Die Lüftungsanlage 23 umfasst einen Lüfter 24 und einen Abluftkanal 25, der an den Prüfraum 12 angeschlossen ist. Mittels des Lüfters 24 kann Luft aus dem Prüfraum 12 in den Abluftkanal 25 gefördert werden, wenn mittels eines hier nicht dargestellten Gassensors in bzw. an dem Prüfraum 12 oder mittels des weiteren Gassensors 22 Kältemittel, insbesondere ein Kohlenwasserstoff oder ein Kältemittelgemisch aus Kohlenwasserstoffen, im Prüfraum 12 oder im Maschinenraum 13 detektiert wird.

Der Lüfter 24 umfasst einen Lüftermotor 26 und ein Lüfterrad 27, wobei der Lüftermotor 26 in einer luftdichten Einhausung 28 angeordnet ist. Die Einhausung 28 ist aus Blech ausgebildet und innerhalb des Maschinenraums 13 angeordnet. Die Lüftungsanlage 23 kann gemäß der Darstellung in **Fig. 2** einen weiteren Lüfter 29 umfassen, der aus einem Lüftermotor 30 und einem Lüfterrad 33 gebildet ist. Mit dem weiteren Lüfter 29 wird eine Entlüftung des Maschinenraums 13 ermöglicht. Bei dem Lüftermotor 26 kann es sich um einen konventionellen Lüftermotor handeln, welcher nicht für einen Betrieb in explosionsgefährdeten Bereichen vorgesehen sein muss. Der weitere Lüfter 29 ist dagegen für eine Verwendung in explosionsgefährdeten Bereichen bestimmt. Der Lüfter 24 und der weitere Lüfter 29 sind an einen gemeinsamen Kanalabschnitt 32 des Abluftkanals 25 angeschlossen. Der gemeinsame Kanalabschnitt 32 verläuft hier außerhalb des Gehäuses 11 in eine Umgebung 33. Ein eventuelles, explosionsfähiges Gemisch von Kältemittel und Luft befindet sich dann außerhalb des Gehäuses 11.

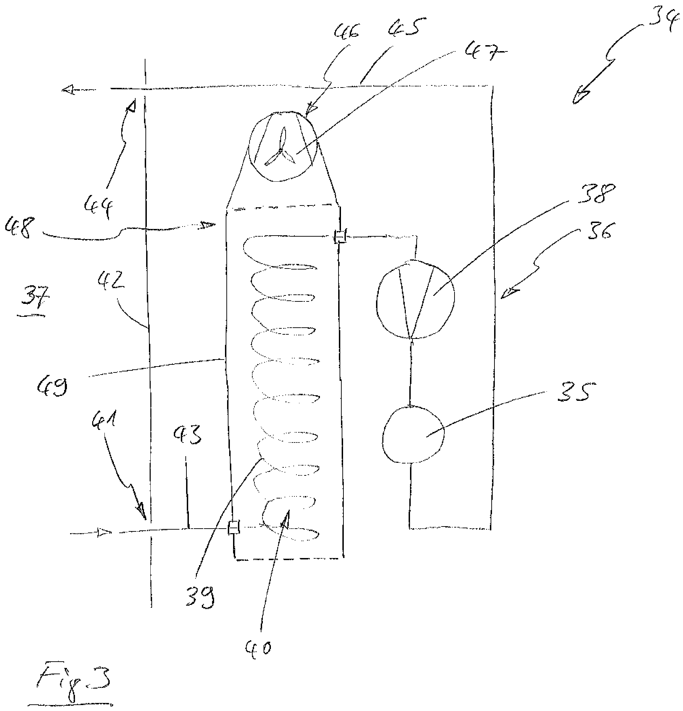

Die **Fig. 3** zeigt eine schematische Ansicht eines Gassensors 34, wie er auch in der mit den **Fig. 1** und **2** beschriebenen Prüfkammer verbaut sein kann. Der Gassensor 34 umfasst einen Sensorkopf 35, ein Transportrohr 36 zur Förderung von Messgas eines Prüfraums 37 und eine Pumpe 38. Das Transportrohr 36 ist abschnittsweise aus einem Kupferrohr 39 ausgebildet, welches seinerseits eine Wendel 40 ausbildet. An einer Entnahmestelle 41 für Messgas in einer Wand 42 des Prüfraums 37 ist das Transportrohr 36 aus einem Kunststoffrohr 43 ausgebildet, welches von der Entnahmestelle 41 zu der Wendel 40 verläuft. Weiter ist an einer Rückführstelle 44 in der Wand 42 das Transportrohr 36 an dem Prüfraum 37 angeschlossen, sodass über die Rückführstelle 44 Messgas wieder in den Prüfraum 37 eingeleitet werden kann. Von der Rückführstelle 44 bis zu dem Sensorkopf 35 ist das Transportrohr 36 ebenfalls durch ein Kunststoffrohr 45 ausgebildet. So kann von der Pumpe 38 Messgas aus dem Prüfraum 37 angesaugt und über die Entnahmestelle 41 bzw. das Kunststoffrohr 43 zu der Wendel 44 und von der Wendel 44 zu der Pumpe 38 und nachfolgend zu dem Sensorkopf 35 gefördert werden. Nach einer Passage des Sensorkopfes 35 wird das Messgas wieder über das Kunststoffrohr 45 in den Prüfraum 37 gefördert.

Weiter umfasst der Gassensor 34 einen Lüfter 46, der durch einen Axialventilator 47 ausgebildet ist. Der Lüfter 46 ist an einem Ende 48 eines Strömungskanals 49 des Gassensors 34 angeordnet. Die Wendel 40 ist innerhalb des Strömungskanals 49 angeordnet. Wenn der Lüfter 46 betrieben wird, wird eine Luftströmung in dem Strömungskanal 49 ausgebildet, die zu einer Temperierung des Transportrohrs 36 bzw. des in der Wendel 40 befindlichen Messgases mittels erzwungener Konvektion führt. Eine Temperatur der ausgebildeten Luftströmung entspricht hier im Wesentlichen einer Umgebungstemperatur des Gassensors 34 bzw. einer Prüfkammer, sodass wesentlich kälteres oder wärmeres Messgas aus dem Prüfraum erwärmt oder gekühlt und so eine Temperatur des Messgases an eine Temperatur der Umgebung angenähert wird. Dadurch wird es möglich mit dem Gassensor 34 auch Gase in einer Atmosphäre zu detektieren, deren Temperatur den Sensorkopf 35 sonst beschädigen oder beeinflussen würde.

## Patentansprüche

1. Gassensor (34) zur Detektion von Gas in einem Prüfraum (12, 37) einer Prüfkammer (10) zur Konditionierung von Luft, insbesondere Temperierkammer, Klimakammer oder dergleichen, wobei der Gassensor einen Sensorkopf (35) aufweist, der mit einer Atmosphäre des Prüfraums in Kontakt bringbar ist,
**dadurch gekennzeichnet,**
**dass** mittels des Gassensors ein Gas, insbesondere ein Kältemittel und/oder ein Kohlenwasserstoff, in dem Prüfraums detektierbar ist, wobei der Gassensor ein Transportrohr (36) aufweist, über das ein Messgas aus dem Prüfraum zu dem Sensorkopf förderbar ist.

2. Gassensor nach Anspruch 1,
**dadurch gekennzeichnet,**
**dass** der Gassensor (34) zur Detektion von Gas in dem Prüfraum (14, 37) bei einer Temperatur in einem Temperaturbereich von -50 °C bis +180 °C innerhalb des Prüfraums ausgebildet ist.

3. Gassensor nach Anspruch 1 oder 2,
**dadurch gekennzeichnet,**
**dass** der Gassensor (34) zur Detektion einer Änderung einer Zusammensetzung der Atmosphäre des Prüfraums (14, 37) ausgebildet ist.

4. Gassensor nach einem der vorangehenden Ansprüche,
**dadurch gekennzeichnet,**
**dass** der Gassensor (34) zur Detektion eines Kältemittels, bevorzugt eines Kältemittels mit der niedrigsten untersten Explosionsgrenze, kalibriert ist.

5. Gassensor nach einem der vorangehenden Ansprüche,
**dadurch gekennzeichnet,**
**dass** der Sensorkopf (35) ein Reaktionswärmesensor oder ein Infrarotsensor ist.

6. Gassensor nach einem der vorangehenden Ansprüche,
**dadurch gekennzeichnet,**
**dass** der Gassensor (34) eine Pumpe (38) zur Förderung des Messgases aus dem Prüfraum (12, 37) durch das Transportrohr (36) zu dem Sensorkopf (35) aufweist.

7. Gassensor nach Anspruch 6,
**dadurch gekennzeichnet,**
**dass** die Pumpe (38) und/oder das Transportrohr (36) mit einem Ablauf für Kondensat ausgebildet ist.

8. Gassensor nach Anspruch 6 oder 7,
**dadurch gekennzeichnet,**
**dass** die Pumpe (38) in einer Strömungsrichtung des Messgases in dem Transportrohr (36) vor dem Sensorkopf (35) angeordnet ist.

9. Gassensor nach einem der vorangehenden Ansprüche,
**dadurch gekennzeichnet,**
**dass** der Gassensor (34) einen Lüfter (46) zur Temperierung des Transportrohrs (36) mit dem Messgas mittels erzwungener Konvektion aufweist.

10. Gassensor nach Anspruch 9,
**dadurch gekennzeichnet,**
**dass** der Gassensor (34) mit einem Strömungskanal (49) ausgebildet ist, an dessen Ende (48) der Lüfter (46) angeordnet ist, wobei das Transportrohr (36) zumindest abschnittsweise in dem Strömungskanal angeordnet ist, wobei mittels des Lüfters eine Luftströmung in dem Strömungskanal ausbildbar ist.

11. Gassensor nach Anspruch 9 oder 10,
**dadurch gekennzeichnet,**
**dass** der Lüfter (46) ein Axialventilator (47) ist.

12. Gassensor nach einem der vorangehenden Ansprüche,
**dadurch gekennzeichnet,**
**dass** das Transportrohr (36) zumindest abschnittsweise wendelförmig, spiralförmig oder schlangenförmig ausgebildet ist.

13. Gassensor nach einem der vorangehenden Ansprüche,
**dadurch gekennzeichnet,**
**dass** das Transportrohr (36) zumindest abschnittsweise durch ein Metallrohr, bevorzugt ein Kupferrohr (39) oder Aluminiumrohr, ausgebildet ist.

14. Gassensor nach einem der vorangehenden Ansprüche,
**dadurch gekennzeichnet,**
**dass** das Transportrohr (36) zumindest an einer Entnahmestelle (41) für Messgas an dem Prüfraum (12, 37) aus einem Kunststoffrohr (43) ausgebildet ist.

15. Gassensor nach einem der vorangehenden Ansprüche,
**dadurch gekennzeichnet,**
**dass** das Transportrohr (36) zumindest an einer Rückführstelle (44) an dem Prüfraum (12, 37) aus einem Kunststoffrohr (45) ausgebildet ist.

16. Prüfkammer (10) zur Konditionierung von Luft, insbesondere Temperierkammer, Klimakammer oder dergleichen, wobei die Prüfkammer einen gegenüber einer Umgebung (33) verschließbaren und temperaturisolierten Prüfraum (12, 37) zur Aufnahme von Prüfgut, und eine Temperiervorrichtung zur Temperierung des Prüfraums umfasst, mittels der eine Temperatur in einem Temperaturbereich von -50 °C bis +180 °C innerhalb des Prüfraums ausbildbar ist, wobei die Temperiervorrichtung eine Heizeinrichtung und eine Kühleinrichtung mit einem Kühlkreislauf mit einem Kältemittel, einem Wärmeübertrager (14) in dem Prüfraum, einem Verdichter (18), einem Kondensator (17) und einem Expansionsorgan aufweist,
**dadurch gekennzeichnet,**
**dass** die Prüfkammer zumindest einen Gassensor (34) nach einem der vorangehenden Ansprüche zur Detektion von Kältemittel in dem Prüfraum umfasst.

17. Prüfkammer nach Anspruch 16,
**dadurch gekennzeichnet,**
**dass** das Kältemittel brennbar und/oder ein Kohlenwasserstoff oder ein Kältemittelgemisch aus Kohlenwasserstoffen ist.

18. Prüfkammer nach Anspruch 16 oder 17,
**dadurch gekennzeichnet,**
**dass** die Prüfkammer (10) eine Lüftungsanlage (23) mit einer Detektoreinrichtung mit zumindest dem Gassensor (34) zur Detektion von Kältemittel in dem Prüfraum umfasst, wobei die Detektoreinrichtung zumindest einen weiteren Gassensor (22) in einem gegenüber einem dem Prüfraum (12, 37) luftdicht getrennten Maschinenraum (13) der Prüfkammer umfasst.

19. Verfahren zur Detektion von Gas in einem Prüfraum (12, 37) einer Prüfkammer (10) zur Konditionierung von Luft, insbesondere Temperierkammer, Klimakammer oder dergleichen, mit einem Gassensor (34), wobei ein Sensorkopf (35) des Gassensors mit einer Atmosphäre des Prüfraums in Kontakt gebracht wird,
**dadurch gekennzeichnet,**
**dass** mittels des Gassensors ein Gas, insbesondere ein Kältemittel und/oder ein Kohlenwasserstoff, in dem Prüfraums detektiert wird, wobei über ein Transportrohr (36) des Gassensors ein Messgas aus dem Prüfraum zu dem Sensorkopf gefördert wird.
